(19) Europäisches Patentamt
European Patent Office
Office européen des brevets

(11) **EP 3 133 446 A1**

(12) **EUROPEAN PATENT APPLICATION**

(43) Date of publication:
**22.02.2017  Bulletin 2017/08**

(51) Int Cl.:
*G03G 15/043* $^{(2006.01)}$     *G03G 15/00* $^{(2006.01)}$

(21) Application number: **16183925.3**

(22) Date of filing: **12.08.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **20.08.2015   JP 2015163243**
**10.09.2015   JP 2015178666**

(71) Applicant: **Canon Kabushiki Kaisha**
**Tokyo 146-8501 (JP)**

(72) Inventors:
• **SEKI, Yuichi**
  **Tokyo 146-8501 (JP)**
• **TAKEZAWA, Satoru**
  **Tokyo 146-8501 (JP)**

(74) Representative: **TBK**
**Bavariaring 4-6**
**80336 München (DE)**

(54) **IMAGE FORMING APPARATUS**

(57)     An image forming apparatus (1) comprises a semiconductor laser for emitting laser light for irradiating a photosensitive drum, BD for detecting laser light before irradiating the photosensitive drum to output BD signal as a reference for determining an initiation position of the photosensitive drum, and a laser circuit board. The laser circuit board causes the semiconductor laser to emit laser light detected by the BD with first light amount. When a BD sensor outputs the BD signal, a laser circuit board causes the semiconductor laser to emit the laser light with second light amount.

FIG. 3

EP 3 133 446 A1

**Description**

BACKGROUND OF THE INVENTION

Field of the Invention

The present disclosure relates to an electrophotographic image forming apparatus. In particular, the present disclosure relates to technology for controlling light amount of laser light used for image formation.

Description of the Related Art

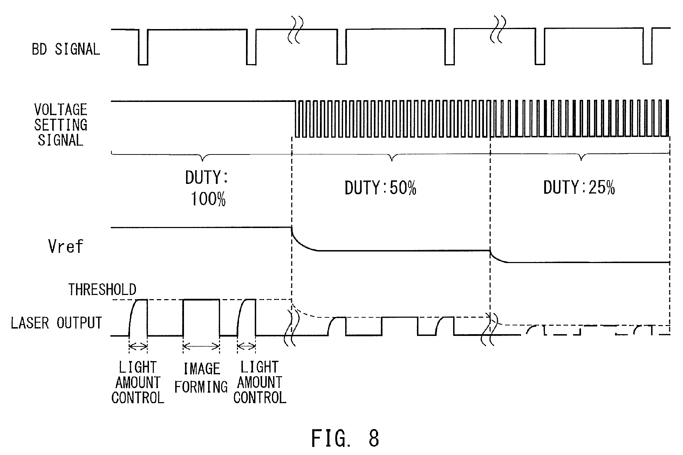

The electrophotographic image forming apparatus performs image formation by irradiating a photoreceptor with laser light to form an electrostatic latent image and adhering developer to the electrostatic latent image. The laser light is output from an optical scanning apparatus comprising an exposure unit comprising a semiconductor laser, a rotating polygon mirror, f-θ lens etc. The semiconductor laser outputs the laser light. The laser light output from the semiconductor laser is periodically deflected by the rotating polygon mirror as the laser light and irradiates the photoreceptor through the f-θ lens. The laser light scans the photoreceptor according to the rotation of the rotating polygon mirror.
The optical scanning apparatus comprises a detection sensor for detecting the laser light (hereinafter, referred to as "BD (Beam Detector)". The BD receives the laser light before or after the laser light scans the photoreceptor. By receiving the laser light, the BD generates BD signals. The BD signal is used to control emitting timing of the laser light based on an image data in one scanning cycle. Further, the BD signal is used to define switching timing of control mode of a laser driver. United States Patent Application Publication No. 2005/212901 discloses an image forming apparatus, in which light amount of the laser light made incident on the BD to generate the BD signal becomes equal to that of the laser light which scans the photoreceptor.
The image forming apparatus disclosed in the United States Patent Application Publication No. 2005/212901, however, has following problems. FIG. 8 is a timing chart of light emission control of the semiconductor laser used for a conventional optical scanning apparatus. As shown in FIG. 8, there may be a case where the light amount of the laser light which scans the photoreceptor needs to be controlled to cope with a state change of the image forming apparatus main body when continuously forming images or to cope with a rapid environmental change of the image forming apparatus. At this time, as shown in FIG. 8, by changing a value of reference voltage Vref, the light amount of the laser light which scans the photoreceptor is controlled. Like the conventional image forming apparatus, if the light amount of the laser light made incident on the BD is equally set to the light amount of the laser light which scans the photoreceptor, the waveform of the BD signal varies before and after the control of the light amount. This causes a problem that a writing start position of the image differs before and after the control of the light amount. To solve this problem, an image forming apparatus capable of separately controlling the light amount of the laser light for generating the BD signal and the light amount of the laser light which scans the photoreceptor is desired.

SUMMARY OF THE INVENTION

The present invention in its first aspect provides an image forming apparatus as specified in claims 1 to 4. The present invention in its second aspect provides an image forming apparatus as specified in claims 5 to 9. The present invention in its third aspect provides an image forming apparatus as specified in claims 10 to 15.
Further features of the present invention will become apparent from the following description of exemplary embodiments (with reference to the attached drawings).

BRIEF DESCRIPTION OF THE DRAWINGS

FIG. 1 is a configuration diagram of an image forming apparatus according to each embodiment.
FIG. 2 is a configuration diagram of an exposure unit according to each embodiment.
FIG. 3 is a configuration diagram of a laser circuit board according to an Embodiment 1.
FIGs. 4A and 4B are explanatory diagrams of reference voltage generating circuits according to each embodiment.
FIGs. 5A and 5B are timing charts of light emission control of semiconductor laser by the laser circuit board according to the Embodiment 1.
FIG. 6 is a configuration diagram of the laser circuit board according to the Embodiment 1.
FIGs. 7A and 7B are timing charts of light emission control of semiconductor laser by a laser circuit board according to an Embodiment 2.

FIG. 8 is a timing chart of light emission control of the conventional semiconductor laser.

FIG. 9 is a configuration diagram of a laser circuit board according to an Embodiment 3.

FIG. 10 is a timing chart showing a hold capacitor selection method.

FIGs. 11A and 11B are timing charts of light emission control of semiconductor laser by the laser circuit board according to the Embodiment 3.

FIG. 12 is another configuration diagram of a laser circuit board according to an Embodiment 4.

FIGs. 13A and 13B are timing charts of light emission control of semiconductor laser by a laser circuit board according to the Embodiment 4.

## DESCRIPTION OF THE EMBODIMENTS

In the following, embodiments are described in detail with reference to the accompanying drawings.

(Embodiment 1)

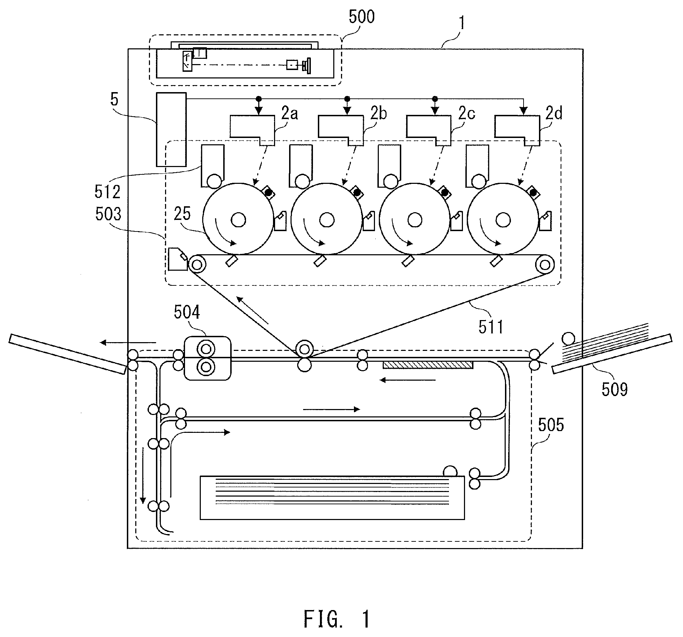

FIG. 1 is a configuration diagram of an electrophotographic image forming apparatus. An image forming apparatus 1 is, for example, a copying machine or a multifunction peripheral. The image forming apparatus 1 includes a plurality of optical scanning apparatuses 2a, 2b, 2c, and 2d, a control unit 5 (controller), an image reading apparatus 500, an image forming unit 503, a fixing unit 504, a sheet feeding/conveying unit 505, and a manual feed tray 509. The image forming unit 503 includes a plurality of photosensitive drums 25, which are photoreceptors respectively corresponding to a plurality of the optical scanning apparatuses 2a, 2b, 2c, and 2d. The image forming unit 503 also includes a plurality of developing units 512 provided to correspond to each photosensitive drum 25. The image forming unit 503 also includes an intermediate transfer body 511.

The image reading apparatus 500 optically reads an original image by exposing light on an original placed on a platen and receiving its reflected light. The image reading apparatus 500 converts the received reflected light into electrical signals and outputs the electrical signals. The control unit processes the electrical signals output from the image reading apparatus 500 and generates the image data according to the original image. The control unit 5 controls light emission of the optical scanning apparatuses 2a, 2b, 2c, and 2d based on the generated image data.

The optical scanning apparatuses 2a, 2b, 2c, and 2d irradiate the corresponding photosensitive drum 25 with the laser light. The image forming unit 503 rotationally drives each photosensitive drum 25 and charges the surface of each photosensitive drum 25 with a charger. By irradiating the photosensitive drum 25, the surface of which is charged, with the laser light, an electrostatic latent image is formed on the surface of the photosensitive drum 25. The developing unit 512, storing toner as a developer, adheres the toner to the electrostatic latent image to perform development. Thereby, a toner image is formed on the photosensitive drum 25. A toner image of a different color is formed on each photosensitive drum 25. For example, the toner images of yellow, magenta, cyan, and black are formed on the photosensitive drum 25. The toner images formed on each photosensitive drum 25 are overlappingly transferred to the intermediate transfer body 511. Thereby, a full-color toner image is formed on the intermediate transfer body 511.

The sheet feeding/conveying unit 505 conveys sheet placed on a paper feeding cassette or the manual feed tray 509 to a position where contacts with the intermediate transfer body 511. The toner image formed on the intermediate transfer body 511 is transferred to the sheet. The sheet having the toner image transferred is conveyed to the fixing unit 504. The fixing unit 504 thermally pressurizes the toner image on the sheet. Due to this, the image is fixed on the sheet. The sheet having the image fixed is delivered outside the image forming apparatus 1. In the above mentioned manner, the image forming apparatus 1 performs the image forming processing.

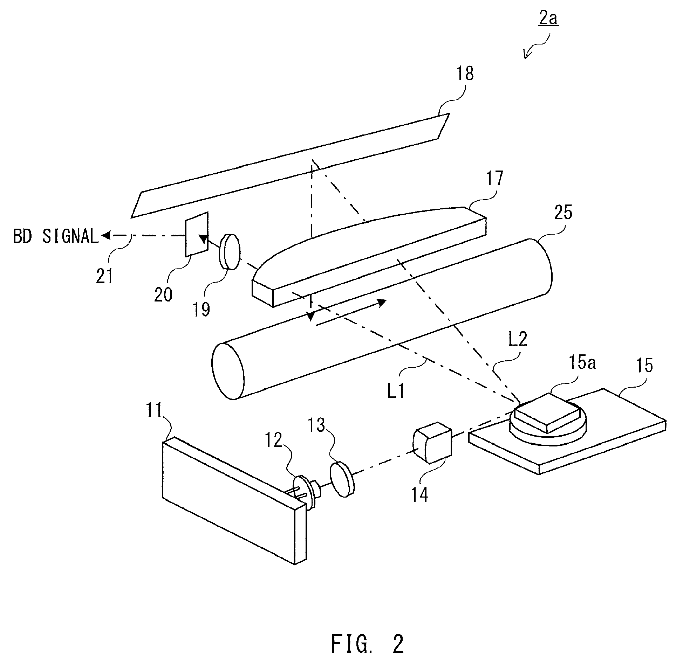

FIG. 2 is a configuration diagram of the optical scanning apparatus 2a. The optical scanning apparatuses 2a, 2b, 2c, and 2d have the same configuration. Thereby, here, a description is provided with regard to the optical scanning apparatus 2a and the description with regard to the rest of the optical scanning apparatuses 2b, 2c, and 2d is omitted.

The optical scanning apparatus 2a comprises a laser circuit board 11, a semiconductor laser 12 for emitting the laser light, a collimate lens 13, a cylindrical lens 14, a rotating polygon mirror of a polygon mirror 15a, f-θ lens 17, a reflection mirror 18, a condensing lens 19, and BD 20.

A reference voltage generating circuit 33, a laser driver 30 and a semiconductor laser 12, which are described later, are mounted in the laser circuit board 11. The laser light emitted from LD 12a (described later) of the semiconductor laser 12 passes through the collimate lens 13 and the cylindrical lens 14 and is incident on a reflection surface of the polygon mirror 15a. The polygon mirror 15a is rotationally driven in a clockwise direction in FIG. 2 by a driving motor 15. The laser light is deflected in accordance with the rotation of the polygon mirror 15a so as to scan the photosensitive drum 25 in an arrow direction. The laser light deflected by the polygon mirror 15a is guided to the photosensitive drum 25 by passing through the f-θ lens 17 and being reflected by the reflection mirror 18.

The BD 20 (a first light receiving element) is arranged to receive the laser light which scans non-image area. The BD 20 receives laser light L1 which is deflected by the polygon mirror 15a through the f-θ lens 17 and the condensing lens 19. The BD 20 is photoelectric conversion elements and outputs BD signal 21 (or synchronization signal) which is a light receiving signal of a voltage corresponding to the light amount received. The BD signal 21 is input into the control unit 5. The control unit 5 converts the BD signal 21 into a pulse signal using threshold of a predetermined voltage. Then, based on the generation timing of the pulse signal, the control unit 5 performs emission timing control of the laser light based on the image data in each scanning period. The BD signal 21 is generated by the laser light respectively deflected to one or more reflection surfaces of the polygon mirror 15a. Thereby, if the rotation speed of the polygon mirror 15a is stabilized, the BD signal 21 is output at a constant period.

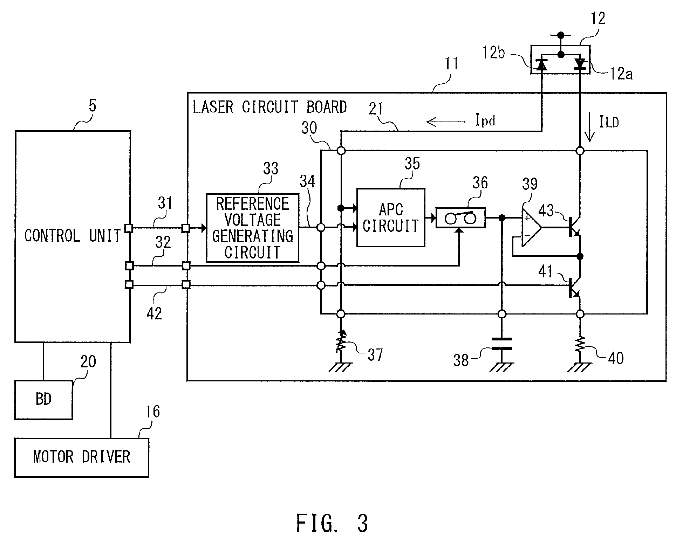

FIG. 3 is a control block diagram for driving the semiconductor laser 12. The laser driver 30, the reference voltage generating circuit 33, a resistor 37, a capacitor 38, a resistor 40, and the semiconductor laser 12 are mounted in the laser circuit board 11. The laser driver 30 is a integrated circuit (laser driver IC). The laser circuit board 11 is connected to the control unit 5 by a cable. The control unit 5 is at least one integrated circuit (controller IC). The control unit 5 is mounted a controller circuit board which is different from the laser circuit board 11.

The semiconductor laser 12 comprises a laser diode (hereinafter, referred to as "LD") 12a which is a light emitting element which emits laser light. The semiconductor laser 12 also comprises a photo diode (a second light receiving element. hereinafter, referred to as "PD") 12b which is a light receiving element which receives the laser light emitted from the LD 12a. The LD 12a emits the laser light of the light amount corresponding to current $I_{LD}$ supplied from the laser driver 30. The PD 12b inputs current $I_{pd}$ corresponding to the light amount received into the laser driver 30. The semiconductor laser 12 of the present embodiment is an edge emitting semiconductor laser which emits laser light bidirectionally. The laser light which is emitted to one side by the semiconductor laser 12 is made incident on the collimate lens 13. The laser light which is emitted to the other side by the semiconductor laser 12 is made incident on the PD 12b. Further, the PD 12b may be disposed outside the semiconductor laser 12.

The laser driver 30 comprises an APC circuit 35 (voltage control circuit), a switch 36, a comparator 39, a transistor 41, and a transistor 43. PWM signal of a video signal 42 is input into the laser driver 30 from the control unit 5. The video signal 42 is a signal to turn ON/OFF the transistor 41. Thereby, for example, if the video signal 42 is in a "High" level, current $I_{LD}$ flows in the LD 12a. The LD 12a emits the laser light of the light amount corresponding to the current $I_{LD}$. On the other hand, if the video signal 42 is in a "Low" level, no current $I_{LD}$ flows in the LD 12a. The transistor 41 is a switch used to turn ON/OFF the LD 12a, which, substantially, does not comprise a current amplifying function.

A value of the current $I_{LD}$ is defined by a voltage of the capacitor 38 and a resistance value of the resistor 40. An anode terminal of the resistor 40 is connected to an emitter terminal of the transistor 41. The cathode terminal of the resistor 40 is grounded. A collector terminal of the transistor 41 is connected to an emitter terminal of the transistor 43. A base terminal of the transistor 43 is connected to an output terminal of the comparator 39.

The comparator 39, the transistor 43 and the resistor 40 function as a current supply circuit for supplying the current $I_{LD}$ to the LD 12a. The capacitor 38 is connected to a non-inverting terminal of the comparator 39. Thereby, voltage V+ of the non-inverting terminal of the comparator 39 is equal to the voltage of the capacitor 38. An inverting terminal of the comparator 39 is connected to the emitter terminal of the transistor 43 and the anode terminal of the resistor 40. Thereby, voltage V- of the inverting terminal of the comparator 39 is equal to the voltage of the anode terminal of the resistor 40.

The voltage V- of the inverting terminal of the comparator 39 is defined by the value of the current $I_{LD}$ and the resistor 40. Based on the comparison result between the voltage V+ of the non-inverting terminal and the voltage V- of the inverting terminal, the comparator 39 controls a base voltage of the transistor 43. It means that the base voltage of the transistor 43 is controlled so that it becomes the voltage corresponding to the voltage of the capacitor 38. The base voltage of the transistor 43 is controlled in this manner so that the voltage of the anode terminal of the resistor 40 is controlled. As a result, the value of the current $I_{LD}$ is controlled.

In the following, a description with regard to APC (Automatic Power Control) is provided. The APC is executed to control the light amount of the laser light emitted from the LD 12a to target light amount. It means that, the APC in the image forming apparatus 1 of the present embodiment is executed to control the voltage of the capacitor 38 to the voltage corresponding to the target light amount. The image forming apparatus 1 of the present embodiment sets one or more target light amounts. One of the target light amounts is the target light amount of the laser light made incident on the BD 20 (a first target light amount). Further, the other target light amount is the target light amount of the laser light which scans the photosensitive drum 25 (a second target light amount). The APC of the present embodiment is a sequence separately executed in one scanning period of the laser light for controlling the light amount of the laser light to the first target light amount and to the second target light amount. The image forming apparatus 1 of the present embodiment separately executes the APC for controlling the laser light to the first target light amount (a first light amount control mode, described later) and the APC for controlling the laser light to the second target light amount (a second light amount control mode, described later) one time in one scanning period of the laser light.

When executing the APC, the control unit 5 connects the switch 36 by a sample hold signal 32. The control unit 5 outputs a voltage setting signal 31 which corresponds to the target light amount of the laser light emitted from the LD 12a. In the present embodiment, the voltage setting signal 31 is PWM (Pulse Width Modulation) signal. The control unit 5 outputs the video signal 42 which is the PWM signal having pulse width which corresponds to the target light amount of the laser light.

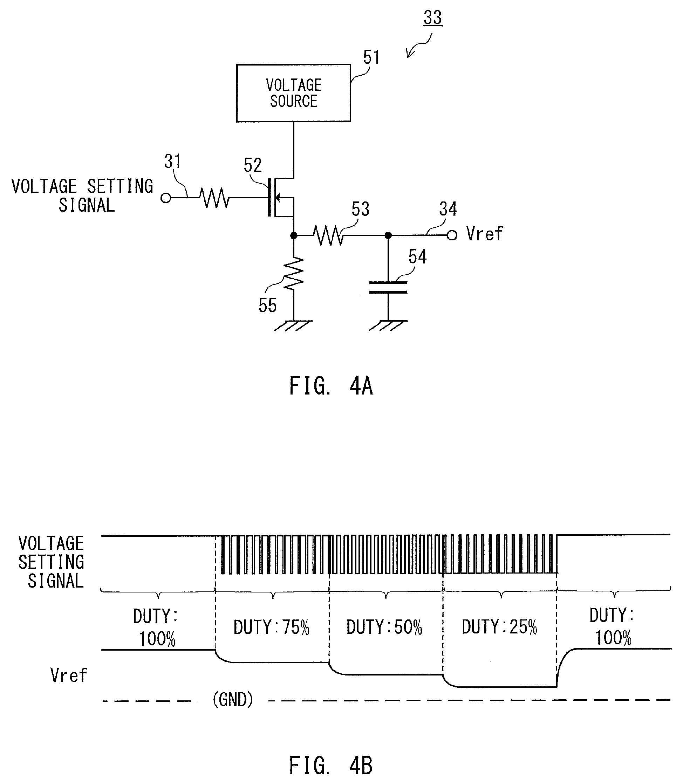

FIG. 4A is a diagram illustrating a configuration of a circuit of the reference voltage generating circuit 33. Further, the reference voltage generating circuit 33 may be disposed inside the laser driver 30 or inside the control unit 5. The reference voltage generating circuit 33 comprises FET (Field Effect Transistor) 52. A drain terminal of the FET 52 is connected to a voltage source 51 which outputs a fixed voltage (for example, 5 V). A gate terminal of the FET 52 is connected to the control unit 5. The voltage setting signal 31 is input into the gate terminal of the FET 52 from the control unit 5. A source terminal of the FET 52 is connected to one terminal of a resistor 53 and one terminal of a resistor 55. The other terminal of the resistor 55 is grounded. The other terminal of the resistor 53 is connected to a capacitor 54.

The FET 52 executes switching operation to connect or release the drain terminal and the source terminal by the PWM signal of the voltage setting signal 31 which is input into the gate terminal. When the FET 52 turns ON, the voltage of the source terminal of the FET 52 is 5 V, which is the voltage output from the voltage source 51. On the other hand, when the FET 52 turns OFF, the voltage of the source terminal of the FET is 0 V. Thereby, in accordance with duty ratio of the PWM signal (voltage setting signal 31), the voltage of the source terminal of the FET 52 takes two values, 5 V and 0 V.

The resistor 53 and the capacitor 54 are electronic components comprising of a smoothing circuit. The smoothing circuit outputs the voltage of the source terminal which varies by the switching operation of the FET 52 as smoothed reference voltage Vref 34. For example, as shown in FIG. 4B, if the duty ratio of the PWM signal (voltage setting signal 31) which is input into the gate terminal of the FET 52 is 100%, the reference voltage Vref 34 is 5 V. If the duty ratio of the PWM signal (voltage setting signal 31) which is input into the gate terminal of the FET 52 is 50%, the reference voltage Vref 34 is 2.5 V. If the duty ratio of the PWM signal (voltage setting signal 31) which is input into the gate terminal of the FET 52 is 20%, the reference voltage Vref 34 is 1 V. By controlling the pulse width of the PWM signal (voltage setting signal 31) in this manner, the reference voltage Vref 34 can be controlled to the target value. The reference voltage Vref 34 generated by the reference voltage generating circuit 33 is input into the APC circuit 35 which is incorporated in the laser driver 30.

When executing the APC, the control unit 5 sets the PWM signal of the video signal 42 to the High level. Due to this, the current $I_{LD}$ corresponding to the voltage of the capacitor 38 flows in the LD 12a. The LD 12a emits the laser light of the light amount corresponding to the current $I_{LD}$. In response to receiving the laser light, the PD 12b outputs the current $I_{pd}$ (light receiving signal) corresponding to the light amount received. The PD 12b is connected to the resistor 37 and the APC circuit 35. The current $I_{pd}$ flows in the ground through the resistor 37. The voltage $V_{pd}$ of the anode of the resistor 37 is defined by the current $I_{pd}$ and the resistance value of the resistor 37. The voltage $V_{pd}$ is input into the APC circuit 35. It means that, by outputting, by the PD 12b, the current $I_{pd}$, the voltage $V_{pd}$ is generated.

The APC circuit 35 incorporates a comparator (not shown) for comparing the reference voltage Vref with the voltage $V_{pd}$. Based on the comparison result between the reference voltage Vref and the voltage $V_{pd}$, the APC circuit 35 controls the voltage of the capacitor 38. It means that, if the reference voltage Vref is more than the voltage $V_{pd}$ (reference voltage Vref>voltage $V_{pd}$), the APC circuit 35 charges the capacitor 38 to increase the voltage of the capacitor 38. On the other hand, if the reference voltage Vref is less than the voltage $V_{pd}$ (reference voltage Vref<voltage $V_{pd}$), the APC circuit 35 discharges charges from the capacitor 38 to decrease the voltage of the capacitor 38. If the reference voltage Vref is equal to the voltage $V_{pd}$ (reference voltage Vref=voltage $V_{pd}$), the APC circuit 35 maintains the voltage of the capacitor 38.

When the APC ends, the control unit 5 releases the connection of the switch 36 by the sample hold signal 32. By the release of the switch 36, the voltage of the capacitor 38 is held.

In this manner, by executing, by the laser driver 30, the APC, the light amount of the laser light emitted from the LD 12a can be controlled to the target light amount. Normally, regardless of the video signal 42, a bias current is supplied to the LD 12a during the image formation as a standby current. However, to simplify description, a description with regard to the bias current is omitted in the present embodiment.

The reference voltage generating circuit 33 may be provided in the control unit 5. Further, if the voltage setting signal 31 is serial/parallel n bit digital signal (n is an integer of 2 or more), the reference voltage generating circuit 33 may execute digital-to-analog conversion of the voltage setting signal 31 to generate the reference voltage Vref 34.

Next, a description with regard to a control mode of the laser driver 30 after starting up the optical scanning apparatus 2a is provided. The control unit 5 switches the control mode of the optical scanning apparatus 2a with falling of the BD signal 21 as a starting point. The control mode of the laser driver 30 of the present embodiment includes a stop (DISCHARGE) mode, a first light amount control mode (APC (1)), a second light amount control mode (APC (2)), an OFF mode, and a VDO mode. To switch the control mode, the control unit 5 outputs control signals in three bits (not shown) respectively corresponding to the five modes to the laser driver 30. By receiving the control signals, the laser driver 30 switches the control mode.

The DISCHARGE mode is a standby mode in a state in which no job for image formation is input. The first light amount control mode is a mode executed to control the light amount of the laser light which is incident on the BD 20 to the target light amount. The second light amount control mode is a mode executed to control the light amount of the laser light which scans the photosensitive drum 25 to the target light amount. The OFF mode is a mode to control the transistor 41 to OFF to prevent the laser light from being emitted from the LD 12a. The VDO mode is a mode in which scanning of photosensitive drum 25 by the laser light based on the image data is executed. The light amount of the laser light which scans the photosensitive drum 25 is set in the second light amount control mode. In the following, descriptions with regard to each mode are provided.

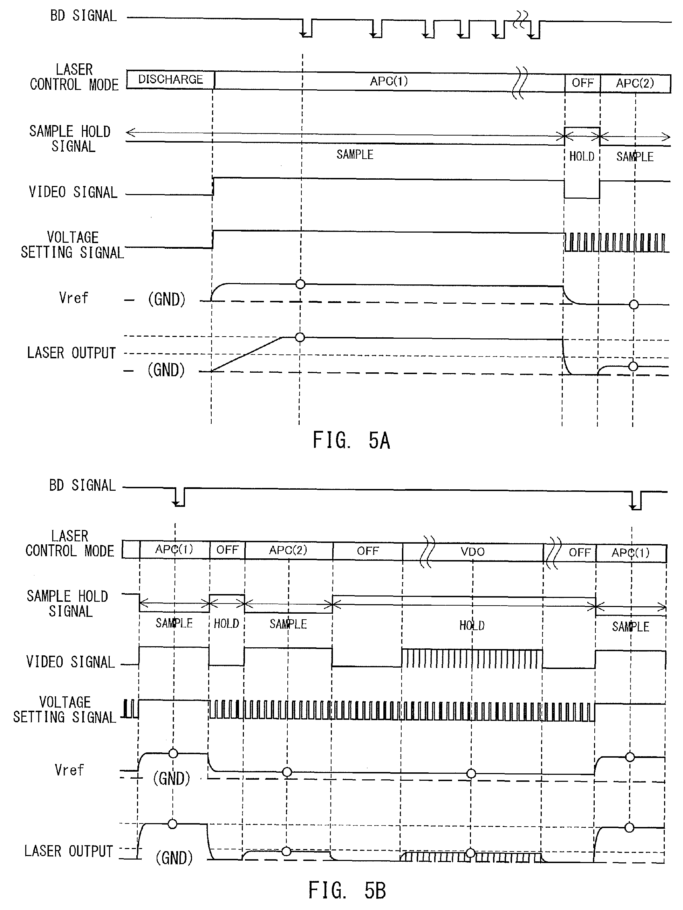

FIGs. 5A and 5B are timing charts showing a control state of the laser circuit board 11. FIG. 5A represents a timing chart when starting up the optical scanning apparatus 2a. FIG. 5B is represents a timing chart of one scanning period of the laser light during the image formation. Following FIG. 5A, processing in accordance with the timing chart of FIG. 5B is executed. The control state of the laser driver 30 is switched by the control unit 5 with the falling of the BD signal 21 as a starting point.

Before starting up the optical scanning apparatus 2a, the control unit 5 sets the control mode of the laser driver 30 in the stop (DISCHARGE) mode. In the DISCHARGE mode, no charge is accumulated in the hold capacitor 38. By the input of the image data into the image forming apparatus 1, the control unit 5 transmits an acceleration signal to a motor driver 16 to start the rotation of the polygon mirror 15a of the optical scanning apparatus 2a. When starting up the optical scanning apparatus 2a, the control unit 5 sets the control mode of the laser driver 30 in the first control mode (APC (1)). The image forming apparatus 1 of the present embodiment rotates the polygon mirror 15a using the BD signal 21 at target rotation speed. If the voltage of the light receiving signal output from the BD 20 does not exceed threshold, the BD signal 21 is not generated. Thereby, to generate the BD signal 21, the control unit 5 sets the control mode of the laser driver 30 in the first light amount control mode.

A description is provided, using FIG. 5A, with regard to the first light amount control mode executed by the laser driver 30 when starting up the optical scanning apparatus 2a. In the first light amount control mode, the control unit 5 outputs the voltage setting signal 31 with the duty ratio of 100%. Further, in the first light amount control mode, the control unit 5 outputs the sample hold signal 32 of Low level. The switch 36 is turned into a connected state by the sample hold signal 32 of Low level. Further, in the first light amount control mode, the control unit 5 outputs the video signal 42 of "High" level.

No charge is charged in the capacitor 38 immediately after the first light amount control mode is started in FIG. 5A so that no voltage difference is caused at both ends of the resistor 40. Thereby, immediately after the first control mode is started, no current flows in the LD 12a. Thereby, the PD 12b outputs no current $I_{pd}$ corresponding to the light amount of the laser light. The reference voltage Vref 34 generated by the reference setting signal 31 with the duty ratio of 100% is input into the APC circuit 35. The APC circuit 35 charges the capacitor 38 based on the comparison result between the reference voltage Vref 34 and the voltage $V_{pd}$ by the internal comparator. The voltage of the capacitor 38 increases by the charging by the APC circuit 35. By the Increase of the voltage of the capacitor 38, the voltage difference between both ends of the resistor 40 increases. When the voltage difference is caused at both ends of the resistor 40, the current $I_{LD}$ flows in the LD 12a. As shown in FIG. 5A, by the increase of the voltage of the capacitor 38 by the charging by the APC circuit 35, the light amount of the laser light (laser output) emitted from the LD 12a increases.

While the control mode is being set in the first light amount control mode, the voltage of the capacitor 38 gradually increases. In accordance with the increase of the voltage of the capacitor 38, the light amount of the laser light emitted from the LD 12a also increases. By the increase of the light amount of the laser light to some extent, the light receiving signal which is output from the BD 20 exceeds the threshold. Thereby, the BD signal 21 is generated. Thereafter, the laser driver 30 controls the voltage of the capacitor 38 until the reference voltage Vref 34 becomes equal to the voltage $V_{pd}$. When the BD 20 detects laser light L1 predetermined number of times and outputs the BD signal 21 predetermined number of times, the laser control mode turns to the second light amount control mode (APC(2)). The optical scanning apparatus 2a then performs light emission control in forming the image of one line (FIG. 5B).

When the BD signal 21 is generated in a target period, the control unit 5 starts the image formation. In the following, a description is provided, using FIG. 5B, with regard to the control mode set in the laser driver 30 during the image formation. FIG. 5B is a diagram illustrating a timing chart of one scanning period of the BD signal. During the image formation, the laser driver 30 repeatedly performs the control mode shown in FIG. 5B for every scanning period. As shown in FIG. 5B, in one scanning period, the control unit switches the control mode of the laser driver 30 to the first light amount control mode, the OFF mode, the second light amount control mode, the OFF mode, the VDO mode, the OFF mode, and the first light amount control mode in order.

As shown in FIG. 5B, to generate the BD signal 21, the control unit 5 sets the laser driver 30 in the first light amount control mode. The description with regard to the first light control mode is already provided as above. Based on the latest BD signal 21, the control unit 5 sets the laser driver 30 in the first light amount control mode immediately before the laser light next scans the BD 20. Before the laser light scans the BD 20, the light amount of the laser light reaches the light amount corresponding to the voltage setting signal 31 with the duty ratio of 100%. Thereby, the BD signal 21 is generated by the laser light of the light amount.

Then, as shown in FIG. 5B, the control unit 5 switches the laser driver 30 from the first light amount control mode to the OFF mode at timing based on the BD signal 21. In the OFF mode, the control unit 5 outputs the sample hold signal 32 of "High" level. By receiving the sample hold signal 32 of "High" level, the laser driver 30 releases the connection of the switch 36. Thereby, the voltage of the capacitor 38 is the voltage set in the first light amount control mode immediately before switching to the OFF mode. Then, as the switch 36 is released, the capacitor 38 is not charged/discharged by the APC circuit 35. Further, in the OFF mode, the control unit 5 outputs no video signal 42. Thereby, in the OFF mode, the transistor 41 turns OFF and no current $I_{LD}$ flows in the LD 12a. Further, in the OFF mode, the control unit 5 outputs the voltage setting signal 31 with the duty ratio below 100% to the laser driver 30. FIG. 5B shows a state in which the control unit 5 outputs the voltage setting signal 31 with the duty ratio of 25%.

As shown in FIG. 5B, the control unit 5 switches the laser driver 30 from the OFF mode to the second light amount control mode at timing based on the BD signal 21. In the second light amount control mode, the control unit 5 outputs the sample hold signal 32 of "Low" level. By receiving the sample hold signal 32 of "Low" level, the laser driver 30 connects the switch 36. Further, in the second light amount control mode, the control unit 5 outputs the video signal 42 of "High" level. Thereby, in the second light amount control mode, the transistor 41 turns ON. The current $I_{LD}$ flows in the LD 12a. The LD 12a emits the laser light of the laser amount corresponding to the current $I_{LD}$. Further, in the second light amount control mode, the same voltage setting signal 31 of the duty ratio as that output in the previous mode, i.e. the OFF mode immediately before switching to the second light amount control mode, is continuously output.

In the second light amount control mode, the laser light emitted from the LD 12a is incident on the PD 12b. The PD 12b outputs the current $I_{pd}$ corresponding to the light amount received. The voltage of one end of the resistor 37 is input into the APC circuit 35. Then, the reference voltage Vref 34 generated by the voltage setting signal 31 with the duty ratio of 25% is input into the APC circuit 35. The APC circuit discharges the capacitor 38 based on the comparison result between the reference voltage Vref 34 and the voltage $V_{pd}$ by the internal comparator.

As shown in FIG. 5B, the control unit 5 switches the laser driver 30 from the second light amount control mode to the OFF mode at timing based on the BD signal 21. The OFF mode is already described so that the description with regard to the OFF mode is omitted.

Then, as shown in FIG. 5B, the control unit 5 switches the laser driver 30 from the OFF mode to the VDO mode at timing based on the BD signal 21. In the VDO mode, continuing from the OFF mode immediately before the VDO mode, the control unit 5 outputs the sample hold signal 32 of "High" level. Thereby, the connection of the switch 36 of the laser driver 30 is released. As the connection of the switch 36 is released, the voltage of the capacitor 38 is the voltage set in the immediately before mode of the second light amount control mode. Then, as the switch 36 is released, the capacitor 38 is not charged/discharged by the APC circuit 35.

In the VDO mode, the control unit 5 outputs the video signal 42 (PWM signal) generated based on the image data. Thereby, in the VDO mode, ON/OFF of the transistor 41 is controlled based on the pulse of the video signal 42. When the transistor 41 turns ON, the current $I_{LD}$ flows in the LD 12a. The value of the current $I_{LD}$ flown in the LD 12a at this time is based on the voltage of the capacitor 38 set in the second light amount control mode. It means that, the current $I_{LD}$ flown in the LD 12a is defined by the voltage difference between both ends of the resistor 40 and the resistance value of the resistor 40. The voltage of one end of the resistor 40 is based on the voltage of the capacitor 38.

Then, as shown in FIG. 5B, the control unit 5 switches the laser driver 30 from the VDO mode to the OFF mode at timing based on the BD signal 21. The OFF mode is already described so that the description with regard to the OFF mode is omitted.

Then, as shown in FIG. 5B, the control unit 5 switches the laser driver 30 from the OFF mode to the first light amount control mode at timing based on the BD signal 21. As mentioned, in the first light amount control mode, the control unit 5 outputs the voltage setting signal1 31 with the duty ratio of 100%. Further, in the first light amount control mode, the control unit 5 outputs the sample hold signal 32 of Low level. The switch 36 turns to the connected state by the sample hold signal 32 of Low level. Further, in the first light amount control mode, the control unit 5 outputs the video signal 42 of "High" level. The voltage of the capacitor 38 immediately before switching to the first light amount control mode is the voltage set in the second light amount control mode. In the first light amount control mode, the APC circuit 35 charges the capacitor 38 based on the comparison result between the voltage $V_{pd}$ and the reference voltage Vref 34 corresponding to the voltage setting signal with the duty ratio of 100%.

Here, a description with regard to the second light amount control mode is provided. The electrophotographic image forming apparatus 1 needs to control the laser light which exposes the photosensitive drum 25 in accordance with a state of the apparatus. It means that, due to aging deterioration of the photosensitive drum 25 and environmental state (temperature, humidity) of the image forming apparatus 1, sensitivity of the photosensitive drum 25 to the laser light changes. Further, the charged amount of the toner stored in the developing unit 512 changes depending on the environmental state. These changes cause a difference between a density of the image output by the image forming apparatus 1 and a density of the image user desires. To solve the problem, the electrophotographic image forming apparatus 1 controls the light amount of the LD 12 in accordance with satisfaction that predetermined condition, such as forming images on a predetermined number of sheets, is satisfied immediately after a source of the apparatus is turned ON. For example, the image forming apparatus 1 forms density detection pattern for each color formed on the intermediate transfer belt 511. Then, based on the detection result, the image forming apparatus 1 controls the light amount of the LD 12a corresponding to each color.

In this manner, by performing switching, by the control unit 5, of the control mode as mentioned in one scanning period, it is possible to separately control the light amount of the laser light made incident on the BD 20 and the light amount of the laser light which scans the photosensitive drum 25. Due to this, it is possible to control the light amount of the laser light made incident on the BD 20 and the light amount of the laser light which exposes the photosensitive drum 25 with high accuracy. The light amount of the laser light which is incident on the BD 20 is controlled substantially constant regardless of the light amount of the laser light which exposes the photosensitive drum 25. Thereby, regardless of the light amount of the laser light which exposes the photosensitive drum 25, it is possible to define a writing start position of the image in a main scanning direction substantially constant. The light amount of the laser light which exposes the photosensitive drum 25 is smaller than that of the laser light made incident on the BD 20. Thereby, the reference voltage Vref 34 when emitting the laser light made incident on the BD 20 is a value higher than the reference value Vref 34 when emitting the laser light which exposes the photosensitive drum 25.

It is noted that the duty ratio of the voltage setting signal 31 for generating the BD signal 21 is not necessarily be 100%. For example, it is desired that the duty ratio of the voltage setting signal 31 for generating the BD signal 21 be separately adjusted when assembling the apparatus by the gain of the photoelectric conversion elements of the BD 20 etc.

(Embodiment 2)

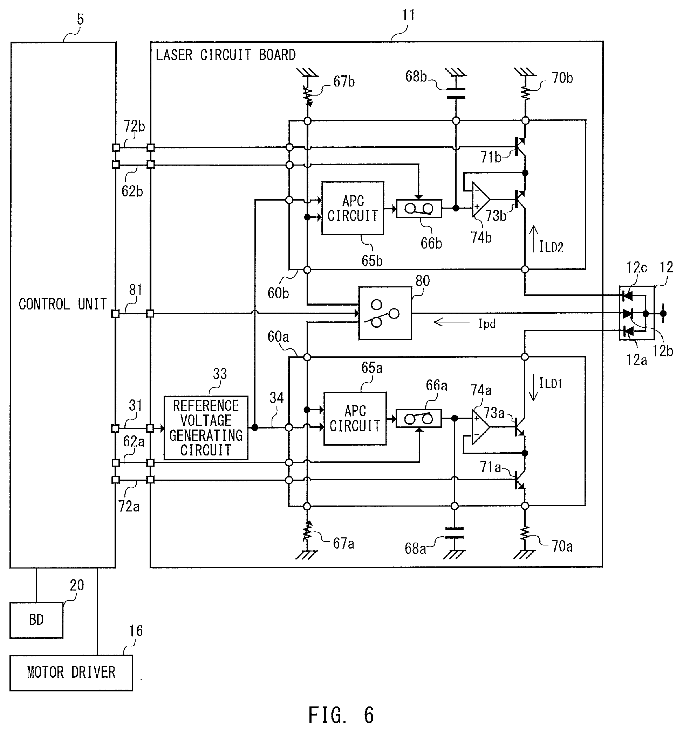

FIG. 6 is another configuration diagram of the laser circuit board 11. The laser circuit board 11 of the Embodiment 2 performs light emission control of a plurality of light emitting elements LD 12a and LD 12c which respectively emit light. The laser circuit board 11 comprises a plurality of laser drivers 60a and 60b having the same configuration as that of the laser driver 30 shown in FIG. 3. The laser driver 60a and the laser driver 60b may be one IC or they may be different ICs. Each configuration of the laser drivers 60a and 60b is the same as that of the laser driver 30 as described in the Embodiment 1 so that the description thereof is omitted. The control unit 5 inputs the sample hold signals 62a and 62b and video signals 72a and 72b into the respective laser drivers 60a and 60b.

In addition to two laser drivers 60a and 60b, the laser circuit board 11 comprises the reference voltage generating circuit 33 and a PD switch 80. The reference voltage generating circuit 33 has the same configuration and functions as that shown in FIG. 3 and generates the reference voltage Vref 34 in response to the voltage setting signal 31 which is input from the control unit 5. In response to a PD switching signal 81 which is input from the control unit 5, the PD switch 80 inputs the current $I_{pd}$ which is output from the PD 12b into one of the laser driver 60a or the laser driver 60b. Further, the reference voltage generating circuit 33 may be disposed inside the laser driver 60a and 60b, or inside the control unit 5.

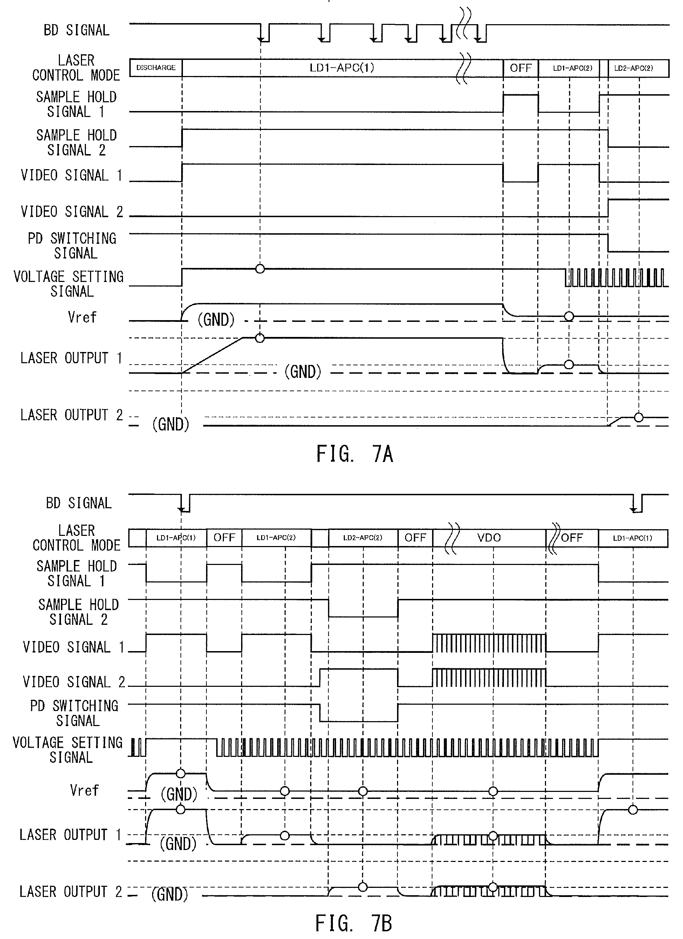

FIGs. 7A and 7B are timing charts showing a control state of the laser circuit board 11 shown in FIG. 6. FIG. 7A represents a timing chart when starting up the optical scanning apparatus 2a. FIG. 7B represents a timing chart of one scanning period of the laser light during the image formation of one line. Following FIG. 7A, processing in accordance with the timing chart of FIG. 7B is executed. In response to the sample hold signals 62a and 62b and the video signals 72a and 72b which are input from the control unit 5, the laser circuit board 11 performs light emission control of the semiconductor laser 12 with the falling of the BD signal as a starting point. The image forming apparatus 1 of the present embodiment generates the BD signal 21 by making the laser light L1 emitted from the LD 12a incident on the BD 20. The laser light L2 emitted from the LD 12c does not contribute to the generation of the BD signal 21. FIGs. 7A and 7B are timing charts based on the BD signal 21 which is output by receiving, by the BD 20, the laser light L1 output from the LD 12a. The control state of the laser drivers 60a and 60b is determined with the falling of the BD signal 21 as a start point.

Before starting up the optical scanning apparatus 2a, the control unit 5 sets the control mode of the laser drivers 60a and 60b in the stop (DISCHARGE) mode. In the DISCHARGE mode, no charge is accumulated in a hold capacitor 68 (a first capacitor) and a hold capacitor 68b (a second capacitor).

By the input of the image data into the image forming apparatus 1, the control unit 5 transmits the acceleration signal to the motor driver 16 to start the rotation of the polygon mirror 15a of the optical scanning apparatus 2a. When starting up the optical scanning apparatus 2a, the control unit 5 sets the control mode of the laser driver 60a in the first light amount control mode (LD1-APC (1)). While the first light amount control mode is being executed, the laser driver 60b turns to the OFF mode. Further, the OFF mode shown in FIG. 7B shows that both the laser drivers 60a and 60b turn to the OFF mode. In the OFF mode, the control unit 5 outputs the video signals 72a and 72b, which are the PWM signals of Low level. Due to this, the transistors 71a and 71b turn to the OFF state. Thereby, no current $I_{LD1}$ flows in the LD 12a. Also, no current $I_{LD2}$ flows in the LD 12c.

In the first light amount control mode (LD1-APC(1)), the control unit 5 sets the video signal 72a to the High level and sets the video signal 72b to the Low level. Due to this, the transistor 71a turns to the ON state and the transistor 71b turns to the OFF state. Further, in the first light amount control mode, the control unit 5 outputs the voltage setting signal 31 with the duty ratio of 100%. Further, in the first light amount control mode, the control unit 5 outputs the PD switching signal 81 of High level to connect the PD 12b with the resistor 67a. Also, by outputting the sample hold signal 62b of Low level, the control unit 5 connects a switch 66a (sample state). At this time, the sample hold signal 62b is in the High level and a switch 66b is in a non-connected state (hold state).

In the first light amount control mode, the laser driver 60a gradually charges the capacitor 68a to decrease the difference between the value of the reference voltage Vref 34 in which the voltage setting signal 31 with the duty ratio of 100% is smoothed and a terminal voltage $V_{pd1}$ of a side to which the resistor 67a is not grounded. In accordance with the increase of the voltage of the capacitor 68a, the light amount of the laser light L1 emitted from the LD 12a increases. By the increase of the light amount of the laser light L1 emitted from the LD 12a to some extent, the light receiving signal which is output from the BD 20 exceeds the threshold. Thereby, the BD signal 21 is generated. Thereafter, the laser driver 60a controls the voltage of the capacitor 68a until the reference voltage Vref 34 becomes equal to the terminal voltage $V_{pd1}$. When the BD 20 detects laser the light L1 predetermined number of times and outputs the BD signal 21 predetermined number of times, the laser control mode turns to the second light amount control mode (LD1-APC(2)). The optical scanning apparatus 2a performs the light emission control in forming the image of one line (FIG. 7B).

When the BD signal 21 is generated in a target period, the control unit 5 starts the image formation. In the following, a description is provided, using FIG. 7B, with regard to the control mode set in the laser driver 60a during the image formation. After the first light amount control mode shown in FIG. 7A, the control unit 5 switches the laser driver 60a from the first light amount control mode to the OFF mode at a timing based on the BD signal 21 (see FIG. 7B). Thereafter, the control unit 5 switches the control mode of the laser driver 60a from the OFF mode to the second light amount control mode (LD1-APC (2)) at a timing based on the BD signal 21. While the second light amount control mode is being set, the laser driver 60b turns to the OFF mode.

In the second light amount control mode (LD1-APC (2)), the control unit 5 sets the video signal 72a to the High level and sets the video signal 72b to the Low level. Due to this, the transistor 71a turns to the ON state and the transistor 71b turns to the OFF state. Further, in the second light amount control mode, the control unit 5 outputs the voltage setting signal 31 with the duty ratio of 25% to the laser circuit board 11. Due to this, the value of the reference voltage Vref 34 is accordingly reduced by 1/4 as compared to that when the duty ratio of the voltage setting signal 31 is 100%. The light amount of the laser light emitted from the semiconductor laser 12 is accordingly reduced by 1/4 as compared to that when the duty ratio of the voltage setting signal 31 is 100%.

Further, in the second light amount control mode, the control unit 5 outputs the PD switching signal 81 of High level to connect the PD 12b with the resistor 67a. Also, by outputting the sample hold signal 62a of Low level, the control unit 5 connects the switch 66a (sample state). At this time, the sample hold signal 62b is in the High level and the switch 66b is in the non-connected state (hold state).

In the second light amount control mode, the laser driver 60a compares the reference voltage Vref 34 in which the voltage setting signal 31 with the duty ratio of 25% is smoothed with the terminal voltage $V_{pd1}$ of a side to which the resistor 67a is not grounded. Then, the laser driver 60a controls the voltage of the capacitor 68a such that the reference voltage Vref 34 becomes equal to the terminal voltage $V_{pd1}$. The current $I_{LD1}$ based on the voltage which is controlled here is supplied to the LD 12a during scanning the photosensitive drum 25.

Thereafter, the control unit 5 switches the laser driver 60a from the second light amount control mode to the OFF mode at timing based on the BD signal 21 (see FIG. 7B). Then, the control unit 5 switches the laser driver 60b from the OFF mode to a third light amount control mode (LD2-APC (2)).

In the third light amount control mode (LD2-APC (2)), the control unit 5 sets the video signal 72a to the Low level and sets the video signal 72b to the High level. Due to this, the transistor 71a turns to the OFF state and the transistor 71b turns to the ON state. Further, in the third light amount control mode, the control unit 5 outputs the voltage setting signal 31 with the duty ratio of 25% to the laser circuit board 11. Due to this, the value of the reference voltage Vref 34 is accordingly reduced by 1/4 as compared to that when the duty ratio of the voltage setting signal 31 is 100%. The light amount of the laser light emitted from the semiconductor laser 12 is accordingly reduced by 1/4 as compared to that when the duty ratio of the voltage setting signal 31 is 100%.

In the third light amount control mode, the control unit 5 outputs the PD switching signal 81 of Low level to connect the PD 12b with the resistor 67b. Also, by outputting the sample hold signal 62b of High level, the control unit 5 connects the switch 66b (sample state). At this time, the sample hold signal 62a is in the Low level and a switch 66a is in the non-connected state (hold state).

In the third light amount control mode, the laser driver 60a compares the reference voltage Vref 34 in which the voltage setting signal 31 with the duty ratio of 25% is smoothed with a terminal voltage $V_{pd2}$ of a side to which the resistor 67a is not grounded. Then, the laser driver 60a controls the voltage of the capacitor 68b such that the reference voltage Vref 34 becomes equal to the terminal voltage $V_{pd2}$. The current $I_{LD2}$ based on the voltage which is controlled here is supplied to the LD 12c during scanning the photosensitive drum 25.

As shown in FIG. 7B, the image forming apparatus 1 of the present embodiment separately performs the first light amount control mode, the second light amount control mode, and the third light amount control mode one time during one scanning period of the laser light. Through the first light amount control mode, the image forming apparatus 1 controls the laser light L1 to the first target light amount. Through the second light amount control mode, the image forming apparatus 1 controls the laser light L2 to second first target light amount. Through the third light amount control mode, the image forming apparatus 1 controls the laser light L2 to the second target light amount.

In this manner, by performing switching, by the control unit 5, of the control mode as mentioned in one scanning period, it is possible to separately control the light amount of the laser light L1 made incident on the BD 20 and the light amount of the laser light L1 and the laser light L2 which scan the photosensitive drum 25. Due to this, it is possible to control the light amount of the laser light L1 made incident on the BD 20 and the light amount of the laser light L1 and the laser light L2 which expose the photosensitive drum 25 with high accuracy. The light amount of the laser light L1 which is incident on the BD is controlled substantially constant regardless of the light amount of the laser light L1 and the laser light L2 which exposes the photosensitive drum 25. Thereby, regardless of the light amount of the laser light L1 and the laser light L2 which exposes the photosensitive drum 25, it is possible to define a writing start position of the image in a main scanning direction substantially constant.

With the image forming apparatus as mentioned, it is possible to control the light amount of the laser light made incident on the BD 20 which receives the laser light for generating the BD signal 21 and the light amount of the laser light which exposes the photosensitive drum 25 with high accuracy.

(Embodiment 3)

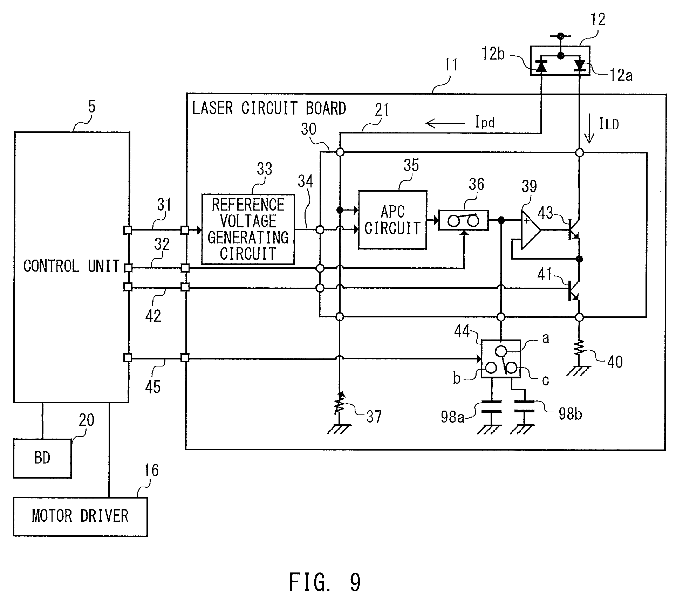

FIG. 9 is a control block diagram for driving the semiconductor laser 12. The laser circuit board 11 of the Embodiment 3 has almost the same configuration as that of the laser circuit board 11 of the Embodiment 1 shown in FIG. 3. Instead of the capacitor 38, the laser circuit board 11 of the present embodiment comprises a capacitor 98a (a first capacitor/a first holding unit), a capacitor 98b (a second capacitor/a second holding unit), and a switch 44. The laser circuit board 11 is connected to the control unit 5 by a cable. The difference with the laser circuit board shown in FIG. 3 is described.

The capacitor 98a is provided to emit the laser light made incident on the BD 20 from the LD 12a. The capacitor 98b is provided to emit the laser light which scans the photosensitive drum 25 from the LD 12a.

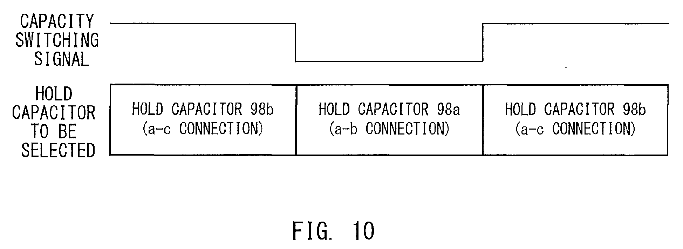

The switch 44 operates in response to a capacity switching signal 45 as shown in FIG. 10. The capacity switching signal 45 is input from the control unit 5. When the capacity switching signal 45 is Low, the switch 44 connects a terminal a with a terminal b. When the terminal a and the terminal b are connected, a voltage Vch_a of the capacitor 98a is applied to the non-inverting terminal of the comparator 39. On the other hand, if the capacity switching signal 45 is High, the switch 44 connects the terminal a with a terminal c. When the terminal a and the terminal c are connected, a voltage Vch_b of the capacitor 98b is applied to the non-inverting terminal of the comparator 39. The inverting terminal of the comparator 39 is connected to an emitter terminal of the transistor 43 and the anode terminal of the resistor 40. Thereby, voltage V- of the inverting terminal of the comparator 39 becomes equal to the voltage of the anode terminal of the resistor 40.

The value of the current $I_{LD}$ is defined by the voltage of the capacitor 98a or the capacitor 98b connected to the non-inverting terminal of the comparator 39 and the resistance value of the resistor 40. An anode terminal of the resistor 40 is connected to an emitter terminal of the transistor 41. The cathode terminal of the resistor 40 is grounded. A collector terminal of the transistor 41 is connected to an emitter terminal of the transistor 43. A base terminal of the transistor 43 is connected to an output terminal of the comparator 39.

The voltage V- of the inverting terminal of the comparator 39 is defined by the value of the current $I_{LD}$ and the resistor 40. Based on the comparison result between the voltage V+ of the non-inverting terminal and the voltage V- of the inverting terminal, the comparator 39 controls the base voltage of the transistor 43. It means that the base voltage of the transistor 43 is controlled so that it becomes the voltage corresponding to the voltage of the capacitor 98a or the capacitor 98b. The base voltage of the transistor 43 is controlled in this manner so that the voltage of the anode terminal of the resistor 40 is controlled. As a result, the value of the current $I_{LD}$ is controlled.

The APC in the present embodiment is executed to control the voltage of the capacitor 98a or the capacitor 98b to the voltage corresponding to the target light amount of the laser light.

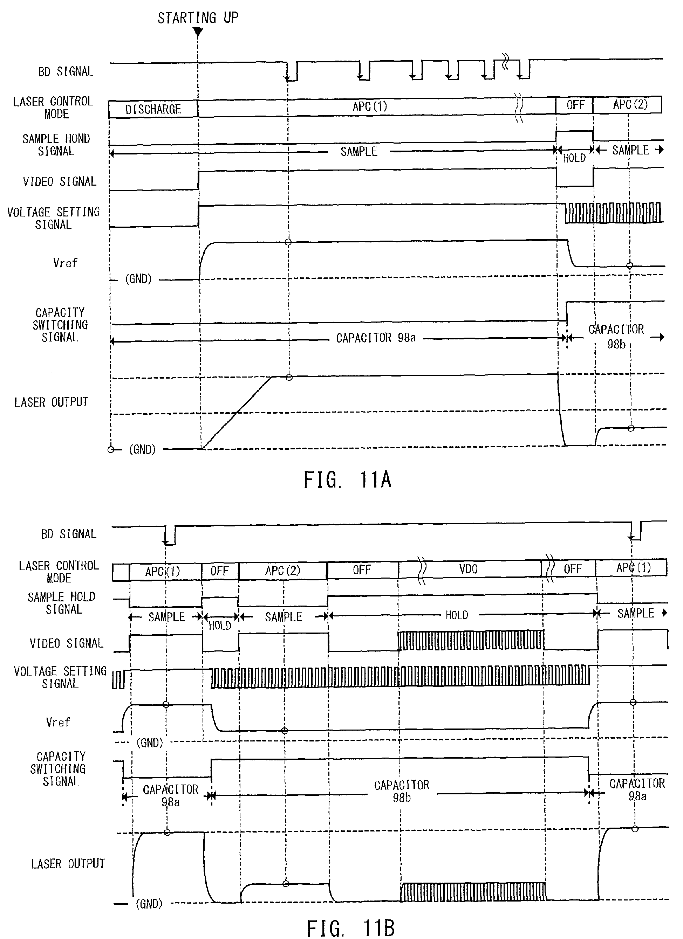

FIGs. 11A and 11B are timing charts showing a control state of the laser circuit board 11. FIG. 11A represents a timing chart when starting up the optical scanning apparatus 2a. FIG. 11B represents a timing chart of one scanning period of the laser light during the image formation. Following FIG. 11A, processing in accordance with the timing chart of FIG. 11B is executed. The control state of the laser driver 30 is switched by the control unit 5 with the falling of the BD signal 21 as a starting point.

Before starting up the optical scanning apparatus 2a, the control unit 5 sets the control mode of the laser driver 30 in the stop (DISCHARGE) mode. In the DISCHARGE mode, no charge is accumulated in the capacitor 98a and the capacitor 98b. By the input of the image data into the image forming apparatus 1, the control unit 5 transmits the acceleration signal to the motor driver 16 to start the rotation of the polygon mirror 15a of the optical scanning apparatus 2a. When starting up the optical scanning apparatus 2a, the control unit 5 sets the control mode of the laser driver 30 in the first control mode (APC (1)). The image forming apparatus 1 of the present embodiment rotates the polygon mirror 15a using the BD signal 21 at the target rotation speed. If the voltage of the light receiving signal output from the BD 20 does not exceed the threshold, the BD signal 21 is not generated. Thereby, to generate the BD signal 21, the control unit 5 sets the control mode of the laser driver 30 in the first light amount control mode.

A description is provided, using FIG. 11A, with regard to the first light amount control mode executed by the laser driver 30 when starting up the optical scanning apparatus 2a. First, the control unit 5 needs to generate the BD signal to stabilize the rotation speed of the polygon mirror 15a. Thereby, the control unit 5 controls a laser driving circuit to the first light amount control mode so that the optical scanning apparatus 2a can generate the BD signal.

In the first light amount control mode, the control unit 5 outputs the voltage setting signal 31 with the duty ratio of 100%. Further, in the first light amount control mode, the control unit 5 outputs the sample hold signal 32 of Low level. The switch 36 turns to the connected state by the sample hold signal 32 of Low level. Further, in the first light amount control mode, the control unit 5 outputs the video signal 42 of High level. Further, in the first light amount control mode, the control unit 5 outputs the capacity switching signal 45 of Low level. With the capacity switching signal 45 of Low level, the switch 44 connects the terminal a with the terminal b.

No charge is charged in the capacitor 98a immediately after the first light amount control mode is started in FIG. 11A so that no voltage difference is caused at both ends of the resistor 40. Thereby, immediately after the start of the first control mode, no current flows in the LD 12a. Thereby, the PD 12b outputs no current $I_{pd}$ corresponding to the light amount of the laser light.

The reference voltage Vref 34 generated by the reference setting signal 31 with the duty ratio of 100% is input into the APC circuit 35. The APC circuit 35 charges the capacitor 98a based on the comparison result between the reference voltage Vref 34 and the voltage $V_{pd}$ by the internal comparator. The voltage Vch_a of the capacitor 98a increases by the charging by the APC circuit 35. By the Increase of the voltage Vch_a of the capacitor 98a, the voltage difference between both ends of the resistor 40 increases. When the voltage difference is caused at both ends of the resistor 40, the current $I_{LD}$ flows in the LD 12a. As shown in FIG. 6A, with the increase of the voltage Vch_a of the capacitor 98a by the charging by the APC circuit 35, the light amount of the laser light (laser output) emitted from the LD 12 increases.

While the control mode is being set in the first light amount control mode, the voltage Vch_a of the capacitor 98 gradually increases. In accordance with the increase of the voltage Vch_a of the capacitor 98a, the light amount of the laser light emitted from the LD 12a increases. By the increase of the light amount of the laser light to some extent, the light receiving signal output from the BD 20 exceeds the threshold. Thereby, the BD signal 21 is generated. Thereafter, the laser driver 30 controls the voltage Vch_a of the capacitor 98a until the reference voltage Vref 34 becomes equal to the voltage $V_{pd}$. When the BD 20 detects the laser light L1 predetermined number of times and outputs the BD signal 21 predetermined number of times, the laser control mode turns to the second light amount control mode (APC(2)). The optical scanning apparatus 2a performs light emission control in forming the image of one line (FIG. 11B).

When the BD signal 21 is generated in a target period, the control unit 5 starts the image formation. In the following, a description is provided, using FIG. 11B, with regard to the control mode set in the laser driver 30 during the image formation. FIG. 11B represents a timing chart of one scanning period of the BD signal. During the image formation, the laser driver 30 repeatedly performs the control mode shown in FIG. 11B for every scanning period.

As shown in FIG. 11B, in one scanning period, the control unit 5 switches the control mode of the laser driver 30 to the first light amount control mode, the OFF mode, the second light amount control mode, the OFF mode, the VDO mode, the OFF mode, and the first light amount control mode in order.

To generate the BD signal 21, the control unit 5 sets the laser driver 30 in the first light amount control mode. The description with regard to the first light control mode is already provided as above. Based on the latest BD signal 21, the control unit 5 sets the laser driver 30 in the first light amount control mode immediately before the laser light next scans the BD 20. Before scanning the BD 20 with the laser light, the light amount of the laser light reaches the light amount corresponding to the voltage setting signal 31 with the duty ratio of 100%. Thereby, the BD signal 21 is generated by the laser light of the light amount.

Then, as shown in FIG. 11B, the control unit 5 switches the laser driver 30 from the first light amount control mode to the OFF mode at timing based on the BD signal 21. In the OFF mode, the control unit 5 outputs the sample hold signal 32 of High level. By receiving the sample hold signal 32 of High level, the laser driver 30 releases the connection of the switch 36. Thereby, the voltage Vch_a of the capacitor 98a is the voltage set in the first light amount control mode immediately before switching to the OFF mode. Then, as the switch 36 is released, the capacitor 98a is not charged/discharged by the APC circuit 35.

Further, in the OFF mode, the control unit 5 outputs no video signal 42. Thereby, in the OFF mode, the transistor 41 turns OFF and no current $I_{LD}$ flows in the LD 12a. Further, in the OFF mode, the control unit 5 outputs the voltage setting signal 31 with the duty ratio below 100% to the laser driver 30. FIG. 11B shows a state in which the control unit 5 outputs the voltage setting signal 31 with the duty ratio of 25%.

Further, the control unit 5 switches the capacity switching signal 45 from Low to High during the OFF mode. With the capacity switching signal 45 of High level, the switch 44 connects the terminal a with the terminal c.

As shown in FIG. 11B, the control unit 5 switches the laser driver 30 from the OFF mode to the second light amount control mode at timing based on the BD signal 21. In the second light amount control mode, the control unit 5 outputs the sample hold signal 32 of Low level. By receiving the sample hold signal 32 of Low level, the laser driver 30 connects the switch 36. Further, in the second light amount control mode, the control unit 5 outputs the video signal 42 of High level. Thereby, in the second light amount control mode, the transistor 41 turns ON. The current $I_{LD}$ flows in the LD 12a. The LD 12a emits the laser light of the laser amount corresponding to the current $I_{LD}$. Further, in the second light amount control mode, the same voltage setting signal 31 of the duty ratio as that output in the previous mode, i.e. the OFF mode immediately before switching to the second light amount control mode, is continuously output.

In the second light amount control mode, the laser light emitted from the LD 12a is made incident on the PD 12b. The PD 12b outputs the current $I_{pd}$ corresponding to the light amount received. The voltage of one end of the resistor 37 is input into the APC circuit 35. Then, the reference voltage Vref 34 generated by the voltage setting signal 31 with the duty ratio of 25% is input into the APC circuit 35. Based on the comparison result between the reference voltage Vref 34 and the voltage $V_{pd}$ by the internal comparator, the APC circuit 35 controls the voltage Vch_b of the capacitor 98b.

As shown in FIG. 11B, the control unit 5 switches the laser driver 30 from the second light amount control mode to the OFF mode at timing based on the BD signal 21. In the OFF mode between the second light amount control mode and the VDO mode, the control unit 5 continuously outputs the capacity switching signal 45 of High level.

Then, as shown in FIG. 11B, the control unit 5 switches the laser driver 30 from the OFF mode to the VDO mode at timing based on the BD signal 21. In the VDO mode, continuing from the OFF mode immediately before the VDO mode, the control unit 5 outputs the sample hold signal 32 of High level and the capacity switching signal 45 of High level. Thereby, the connection of the switch 36 of the laser driver 30 is released. As the connection of the switch 36 is released, the voltage Vch_b of the capacitor 98b is maintained at the voltage set in the immediately before mode of the second light amount control mode. Then, as the switch 36 is released, the capacitor 98b is not charged/discharged by the APC circuit 35. Further, as the terminal a and the terminal c are connected by the capacity switching signal 45, the voltage of the capacitor 98b is input to the non-inverting terminal of the comparator 39.

In the VDO mode, the control unit 5 outputs the video signal (PWM signal) generated based on the image data. Thereby, in the VDO mode, ON/OFF of the transistor 41 is controlled based on the pulse of the VDO signal. When the transistor 41 turns ON, the current $I_{LD}$ flows in the LD 12a. The value of the current $I_{LD}$ flown in the LD 12a at this time is based on the voltage Vch_b of the capacitor 98b set in the second light amount control mode. It means that, the current $I_{LD}$ flown in the LD 12a is defined by the voltage difference between both ends of the resistor 40 and the resistance value of the resistor 40. The voltage of one end of the resistor 40 is based on the voltage Vch_b of the capacitor 98b.

Then, as shown in FIG. 11B, the control unit 5 switches the laser driver 30 from the VDO mode to the OFF mode at timing based on the BD signal 21. In the OFF mode at this time, the control unit 5 switches the capacity switching signal 45 from the High level to the Low level. Through this, the switch 44 connects the terminal a with the terminal b.

Then, as shown in FIG. 11B, the control unit 5 switches the laser driver 30 from the OFF mode to the first light amount control mode at timing based on the BD signal 21. As mentioned, in the first light amount control mode, the control unit 5 outputs the voltage setting signal 31 with the duty ratio of 100%. Further, in the first light amount control mode, the control unit 5 outputs the sample hold signal 32 of Low level. The switch 36 turns to the connected state by the sample hold signal 32 of Low level. Further, in the first light amount control mode, the control unit 5 outputs the video signal of High level. The voltage Vch_a of the capacitor 98a immediately before switching to the first light amount control mode is the voltage set by the previous first light amount control mode. In the first light amount control mode, the APC circuit 35 controls the voltage Vch_a of the capacitor 98a based on the comparison result between the voltage $V_{pd}$ and the reference voltage Vref 34 corresponding to the voltage setting signal with the duty ratio of 100%.

Here, a description with regard to the second light amount control mode is provided. The electrophotographic image forming apparatus 1 needs to control the laser light which exposes the photosensitive drum 25 in accordance with a state of the image forming apparatus 1. It means that, due to aging deterioration of the photosensitive drum 25 and environmental state (temperature, humidity) of the image forming apparatus 1, sensitivity of the photosensitive drum 25 to the laser light changes. Further, the charged amount of the toner stored in the developing unit 512 changes depending on the environmental state. These changes cause difference between the density of the image output by the image forming apparatus 1 and the density of the image a user desires. To solve the problem, the electrophotographic image forming apparatus 1 controls the light amount of the LD 12a in accordance with satisfaction that predetermined condition, such as forming images on predetermined number of sheets, is satisfied immediately after the power of the apparatus is turned ON. For example, the image forming apparatus 1 forms density detection pattern for each color formed on the intermediate transfer body 511. Then, based on the detection result, the image forming apparatus 1 controls the light amount of the LD 12a corresponding to each color.

In this manner, by performing switching, by the control unit 5, the control mode as mentioned in one scanning period, it is possible to separately control the light amount of the laser light made incident on the BD 20 and the light amount of the laser light which scans the photosensitive drum 25. Due to this, it is possible to control the light amount of the laser light made incident on the BD 20 and the light amount of the laser light which exposes the photosensitive drum 25 with high accuracy. The light amount of the laser light which is incident on the BD is controlled substantially constant regardless of the light amount of the laser light which exposes the photosensitive drum 25. Thereby, regardless of the light amount of the laser light which exposes the photosensitive drum 25, it is possible to define a writing start position of the image in a main scanning direction substantially constant. The light amount of the laser light which exposes the photosensitive drum is smaller than that of the laser light made incident on the BD 20. Thereby, the value of the reference voltage Vref when emitting the laser light made incident on the BD 20 is higher than that of the reference voltage Vref when emitting the laser light which exposes the photosensitive drum 25.

It is noted that the duty ratio of the voltage setting signal 31 for generating the BD signal 21 is not necessarily be 100%. For example, it is desired that the duty ratio of the voltage setting signal 31 for generating the BD signal 21 be separately adjusted when assembling the apparatus by gain of the photoelectric conversion elements of the BD 20 etc.

In the following, a specification example of the semiconductor laser 12 and an example of the control target value are shown.

(Specification)

- A light emission initiation current Ith of the semiconductor laser 12 is 5 ma and light emission efficiency $\eta$ of the semiconductor laser 12 is 0.5 mW/ma.
- A charging/discharging current Id of the laser driver is 1 $\mu$A, a leak current I_leak of a terminal to which the switch 44 is connected is 0.1 $\mu$A, a current amplification factor $\alpha$ is 100 times, the resistor 40 is 10 k$\Omega$.
- Scanning time of the optical scanning apparatus 2a is as follows. Time T1 for a first light emission control mode is 25 $\mu$S. Time T2 for an image forming mode is 500 $\mu$S.

(Control target value)

Following shows the control target value in each laser control mode where light amount Po is 5 mW (Light amount Po=5 mW).

- At the first light amount control mode, rising time of light amount waveform Tr is below 5 $\mu$S (first target value).
- At the image forming mode, a light amount variation rate $\Delta$Po is below 0.5% (second target value).

Capacity of the capacitor 98a needs to be converged to the time T1 for the first light amount control mode with respect to variation amount of an inter-terminal voltage of the capacitor 98a $\Delta$Vch_a generated during scanning in the first light amount control mode. Thereby, the first target value needs to be satisfied. Variation amount $\Delta$ILD of a driving current with respect to the light amount variation rate $\Delta$Po of the semiconductor laser 12 is shown by an equation 1. $\Delta$ILD is determined by the variation amount of the inter-terminal voltage of the capacitor 98a $\Delta$Vch_a shown by an equation 2.

$$\Delta ILD=\Delta po/\eta=5\ mW*0.5\%/0.5\ mW/mA$$

$$=0.05\ mA \qquad (Eq.\ 1)$$

$$\Delta Vch\_a=\Delta ILD*Rs/\alpha$$

$$=0.05\ mA*10\ k\Omega/100$$

$$=0.005\ V \qquad Eq.\ 2)$$

In the above, it is possible to reach $\Delta$Vch_a as the capacitance of the capacitor 98a is smaller, which is obtained by an equation 3 by the light amount control/rising time Tr and the charging/discharging current Id.

$$\text{Capacity of capacitor } 98a = Tr*Id/\Delta Vch\_a$$

$$= 5\ \mu S*1\ \mu A/0.005\ V \leq 1000\ pF \qquad\qquad (Eq.\ 3)$$

The capacitor 98b holds the voltage Vch_b controlled by the second light amount control mode. The driving current of the semiconductor laser 12 is determined by an inter-terminal voltage of the capacitor 98b. To satisfy the second target value, variation amount of an inter-terminal voltage of the capacitor 98b $\Delta$Vch_b needs to be a value below that obtained by the equation 2.

The variation amount $\Delta$Vch_b is generated by the leak current I_leak of the laser driver 30 and the time T2 for the image forming mode during which the capacitor 98b accumulates charge. It is possible to suppress $\Delta$Vch_b as the capacitance of the capacitor 98b is larger, which is obtained by an equation 4 by the time T2 for the image forming mode and the leak current I_leak.

$$\text{Capacity of capacitor } 98b = T2*I\_leak/\Delta Vch\_b$$

$$= 500\ \mu S*0.1\ \mu A/0.005\ V \geq 0.01\ \mu F \qquad\qquad (Eq.\ 4)$$

In this manner, the capacitance of the capacitor 98a selected in the first light amount control mode needs to make it smaller than that of the capacitor 98b selected in the second light amount control mode. As mentioned, by setting the capacitance of the capacitor 98a and the capacitor 98b, it is possible to set the rising time Tr below 5 $\mu$S at the first light amount control mode and set the light amount variation rate $\Delta$Po below 0.5% at the image forming mode.

The image forming apparatus of the present embodiment switches two capacitors 98a and 98b. Thereby, to execute each light amount control mode, it is possible to control the voltage of each capacitor based on the voltage controlled in the same light amount control mode of the previous scanning period. Thereby, it is possible to suppress increase of light amount control time.

(Embodiment 4)

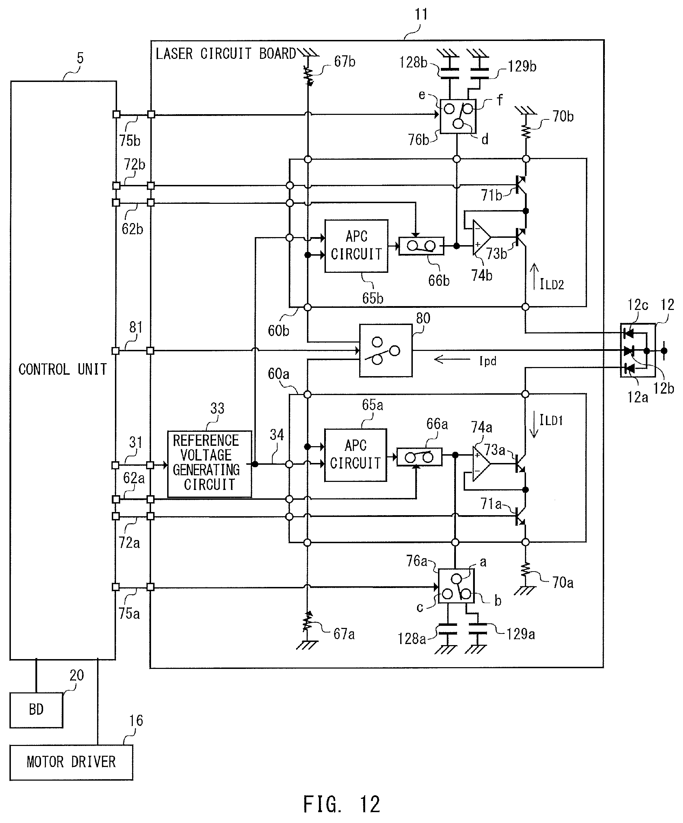

FIG. 12 is other configuration diagram of the laser circuit board 11. The laser circuit board 11 of the Embodiment 3 performs light emission control of a plurality of light emitting elements LD 12a and LD 12c which respectively emit light. The laser circuit board 11 of the Embodiment 4 has almost the same configuration as that of the laser circuit board 11 of the Embodiment 2 shown in FIG. 6. Instead of the capacitor 68a, the laser circuit board 11 of the present embodiment comprises a capacitor 128a, a capacitor 129a, and a switch 76a. Instead of the capacitor 68b, the laser circuit board 11 of the present embodiment comprises a capacitor 128b and, a capacitor 129b, and a switch 76b.

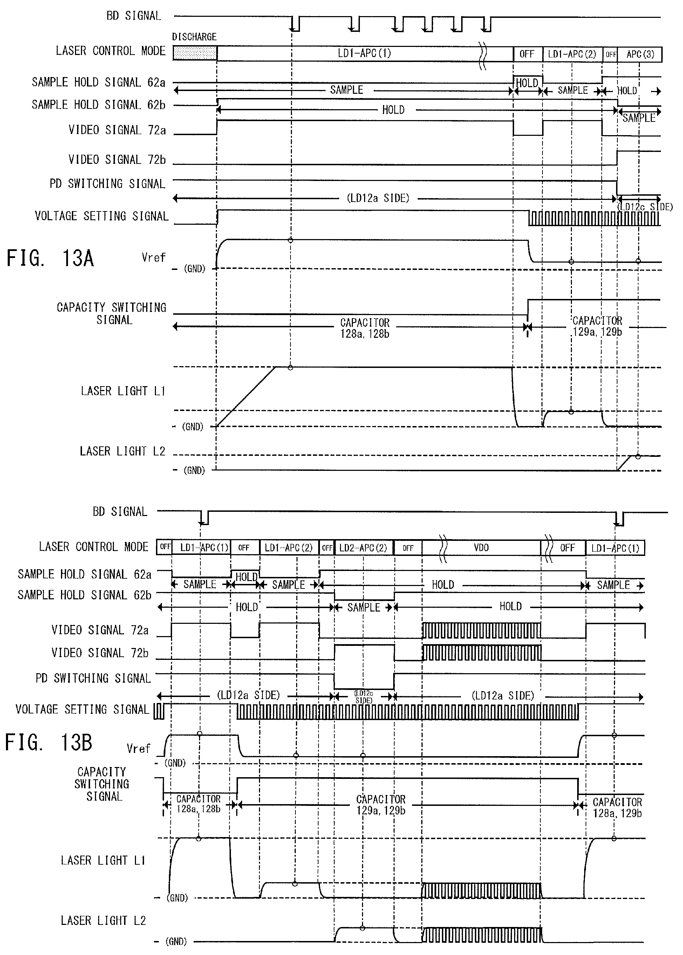

FIGs. 13A and 13B are timing charts showing a control state of the laser circuit board 11 as shown in FIG. 12A. FIG. 13A represents a timing chart when starting up the optical scanning apparatus 2a. FIG. 13B represents a timing chart of one scanning period of the laser light during the image formation of one line. Following FIG. 13A, processing in accordance with the timing chart of FIG. 13B is executed. In response to the sample hold signals 62a and 62b and the video signals 72a and 72b which are input from the control unit 5, the laser circuit board 11 performs light emission control of the semiconductor laser 12 with the falling of the BD signal as a starting point. The image forming apparatus 1 of the present embodiment generates the BD signal 21 by making the laser light L1 emitted from the LD 12a incident on the BD 20. The laser light L2 emitted from the LD 12c does not contribute to the generation of the BD signal 21. FIGs. 13A and 13B are timing charts based on the BD signal 21 which is output by receiving, by the BD 20, the laser light L1 output from the LD 12a. The control state of the laser drivers 60a and 60b is determined with the falling of the BD signal 21 as a start point.

Before starting up the optical scanning apparatus 2a, the control unit 5 sets the control mode of the laser drivers 60a and 6b in the stop (DISCHARGE) mode. In the DISCHARGE mode, no charge is accumulated in the capacitor 128a, the capacitor 128b, and the capacitor 129b.

By the input of the image data into the image forming apparatus 1, the control unit 5 transmits the acceleration signal to the motor driver 16 to start the rotation of the polygon mirror 15a of the optical scanning apparatus 2a. When starting up the optical scanning apparatus 2a, the control unit 5 sets the control mode of the laser driver 60a in the first light amount control mode (LD1-APC(1)). While the first light amount control mode is being executed, the laser driver 60b turns to the OFF mode. Further, the OFF mode shown in FIGs. 13A and 13B shows that both the laser drivers 60a and 60b turn to the OFF mode. In the OFF mode, the control unit 5 outputs the video signals 72a and 72b of Low level. Due to this, the transistors 71a and 71b turn to the OFF state. Thereby, no current $I_{LD1}$ flows in the LD 12a. Also, no current $I_{LD2}$ flows in the LD 12c.

In the first light amount control mode (LD1-APC(1)), the control unit 5 sets the video signal 72a to the High level and sets the video signal 72b to the Low level. Due to this, the transistor 71a turns to the ON state and the transistor 71b turns to the OFF state. Further, in the first light amount control mode, the control unit 5 outputs the voltage setting signal 31 with the duty ratio of 100%. Further, in the first light amount control mode, the control unit 5 outputs the PD switching signal 81 of High level to connect the PD 12b with the resistor 67a. Also, by outputting the sample hold signal 62b of Low level, the control unit 5 connects the switch 66a (sample state). At this time, the sample hold signal 62b is in the High level and the switch 66b is in the non-connected state (hold state).

In the first light amount control mode, the laser driver 60a gradually charges the capacitor 128a to decrease the difference between the reference voltage Vref 34 in which the voltage setting signal 31 with the duty ratio of 100% is smoothed and the terminal voltage $V_{pd1}$ of a side to which the resistor 67a is not grounded. In accordance with the increase of the voltage of the capacitor 128a, the light amount of the laser light L1 emitted from the LD 12a increases. By the increase of the light amount of the laser light L1 emitted from the LD 12a to some extent, the light receiving signal which is output from the BD 20 exceeds the threshold. Thereby, the BD signal 21 is generated. Thereafter, the laser driver 60a controls the voltage of the capacitor 128a until the reference voltage Vref 34 becomes equal to the terminal voltage $V_{pd1}$. When the BD 20 detects the laser the light L1 predetermined number of times and outputs the BD signal 21 predetermined number of times, the laser control mode turns to the second light amount control mode (LD1-APC(2)). The optical scanning apparatus 2a performs the light emission control in forming the image of one line (FIG. 13B).

When the BD signal 21 is generated in a target period, the control unit 5 starts the image formation. In the following, a description is provided, using FIG. 13B, with regard to the control mode set in the laser driver 60a during the image formation. The control mode is set in the laser driver 60b in a similar manner. After the first light amount control mode shown in FIG. 13B, the control unit 5 switches the laser driver 60a from the first light amount control mode to the OFF mode at timing based on the BD signal 21 (see FIG. 13B). Thereafter, the control unit 5 switches the control mode of the laser driver 60a from the OFF mode to the second light amount control mode (LD1-APC(2)) at timing based on the BD signal 21. While the second light amount control mode is being set, the laser driver 60b turns to the OFF mode.

In the second light amount control mode (LD1-APC(2)), the control unit 5 sets the video signal 72a to the High level and sets the video signal 72b to the Low level. Due to this, the transistor 71a turns to the ON state and the transistor 71b turns to the OFF state. Further, in the second light amount control mode, the control unit 5 outputs the voltage setting signal 31 with the duty ratio of 25% to the laser circuit board 11. Due to this, the value of the reference voltage Vref 34 is reduced by 1/4 as compared to that when the duty ratio of the voltage setting signal 31 is 100%. The light amount of the laser light emitted from the semiconductor laser 12 is accordingly reduced by 1/4 as compared to that when the duty ratio of the voltage setting signal 31 is 100%.

Further, in the second light amount control mode, the control unit 5 outputs the PD switching signal 81 of High level to connect the PD 12b with the resistor 67a. Also, by outputting the sample hold signal 62b of Low level, the control unit 5 connects the switch 66a (sample state). At this time, the sample hold signal 62b is in the High level and the switch 66b is in the non-connected state (hold state).

In the second light amount control mode, the laser driver 60a compares the reference voltage Vref 34 in which the voltage setting signal 31 with the duty ratio of 25% is smoothed with the terminal voltage $V_{pd1}$ of a side to which the resistor 67a is not grounded. The laser driver 60a controls the voltage of the capacitor 128 so that the reference voltage Vref 34 becomes equal to the voltage $V_{pd1}$. The current $I_{LD1}$ based on the voltage which is controlled here is supplied to the LD 12a during scanning the photosensitive drum 25.

Thereafter, the control unit 5 switches the laser driver 60a from the second light amount control mode to the OFF mode at timing based on the BD signal 21 (see FIG. 13B). Then, the control unit 5 switches the laser driver 60b from the OFF mode to the third light amount control mode (LD2-APC(2)).

In the third light amount control mode (LD2-APC(2)), the control unit 5 sets the video signal 72a to the Low level and sets the video signal 72b to the High level. Due to this, the transistor 71a turns to the OFF state and the transistor 71b turns to the ON state. Further, in the third light amount control mode, the control unit 5 outputs the voltage setting signal 31 with the duty ratio of 25% to the laser circuit board 11. Due to this, the value of the reference voltage Vref 34 is reduced by 1/4 as compared to that when the duty ratio of the voltage setting signal 31 is 100%. The light amount of the laser light emitted from the semiconductor laser 12 is accordingly reduced by 1/4 as compared to that when the duty ratio of the voltage setting signal 31 is 100%.

In the third light amount control mode, the control unit 5 outputs the PD switching signal 81 of Low level to connect the PD 12b with the resistor 67b. Also, by outputting the sample hold signal 62b of High level, the control unit 5 connects the switch 66b (sample state). At this time, the sample hold signal 62a is in the Low level and the switch 66b is in the non-connected state (hold state).

In the third light amount control mode, the laser driver 60a compares the reference voltage Vref 34 in which the voltage setting signal 31 with the duty ratio of 25% is smoothed with the terminal voltage $V_{pd2}$ of a side to which the resistor 67a is not grounded. Thereafter, the laser driver 60a controls the voltage of the capacitor 128b so that the reference voltage Vref 34 becomes equal to the voltage $V_{pd2}$. The current $I_{LD2}$ based on the voltage which is controlled here is supplied to the LD 12c during scanning the photosensitive drum 25.

As shown in FIG. 13B, the image forming apparatus 1 of the present embodiment separately performs the first light amount control mode, the second light amount control mode, and the third light amount control mode one time during one scanning period of the laser light. Through the first light amount control mode, the image forming apparatus 1 controls the laser light L1 to the first target light amount. Through the second light amount control mode, the image forming apparatus 1 controls the laser light L2 to the second first target light amount. Through the third light amount control mode, the image forming apparatus 1 controls the laser light L2 to the second target light amount.

In this manner, by performing switching, by the control unit 5, of the control mode as mentioned in one scanning period, it is possible to separately control the light amount of the laser light L1 made incident on the BD 20 and the light amount of the laser light L1 and the laser light L2 which scan the photosensitive drum 25. Due to this, it is possible to control the light amount of the laser light L1 made incident on the BD 20 and the light amount of the laser light L1 and the laser light L2 which expose the photosensitive drum 25 with high accuracy. The light amount of the laser light L1 made incident on the BD is controlled substantially constant regardless of the light amount of the laser light which exposes the photosensitive drum 25. Thereby, regardless of the light amount of the laser light which exposes the photosensitive drum 25, it is possible to define a writing start position of the image in a main scanning direction substantially constant.

While the present invention has been described with reference to exemplary embodiments and it is to be understood that the invention is not limited to the disclosed exemplary embodiments. The scope of the following claims is to be accorded the broadest interpretation so as to encompass all such modifications and equivalent structures and functions.

An image forming apparatus (1) comprises a semiconductor laser for emitting laser light for irradiating a photosensitive drum, BD for detecting laser light before irradiating the photosensitive drum to output BD signal as a reference for determining an initiation position of the photosensitive drum, and a laser circuit board. The laser circuit board causes the semiconductor laser to emit laser light detected by the BD with first light amount. When a BD sensor outputs the BD signal, a laser circuit board causes the semiconductor laser to emit the laser light with second light amount.

**Claims**

1. An image forming apparatus (1) comprising:

    a photoreceptor;
    a light emitting element configured to emit laser light of a light amount corresponding to a value of current supplied;
    a first light receiving element (20) configured to receive laser light emitted from the light emitting element to generate light receiving signal of a voltage corresponding to light amount received for controlling the light amount of the laser light;
    a deflection means (15a) configured to deflect the laser light to cause the laser light emitted from the light emitting element such that the laser light deflected by the deflection means scans the photoreceptor;
    a second light receiving element (12b) arranged on a scanning path of the laser light deflected by the deflection means and configured to generate a synchronization signal by receiving the laser light deflected by the deflection means;
    a timing control means configured to control emitting timing of the laser light based on an image data in one scanning period of the laser light based on a generation timing of the synchronization signal;
    an output means configured to output a first reference voltage for controlling a light amount of the laser light which is incident on the second light receiving element and to output a second reference voltage for controlling a light amount of the laser light which scans the photoreceptor;
    a capacitor;
    a voltage control means to which the light receiving signal is input, to which the first reference voltage and the second reference voltage are input, configured to compare the voltage of the light receiving signal with the first reference voltage or the second reference voltage and configured to control the voltage of the capacitor based on a comparison result; and
    a current supply means arranged to supply current of which a value corresponds to the voltage of the capacitor.

2. The image forming apparatus according to claim 1, wherein the first reference voltage is higher than a value of the second reference voltage.

3. The image forming apparatus according to claim 1, wherein the output means is further configured to separately output the first reference voltage and the second reference voltage one time during one scanning period of the laser light.

4. The image forming apparatus according to claim 3, wherein, in one scanning period of the laser light, the output means is further configured to output the second reference voltage between timing at which the first reference voltage is output and timing at which the laser light scans the photoreceptor.

5. An image forming apparatus comprising:

a photoreceptor,
a first light emitting element configured to emit laser light of a light amount corresponding to a value of current supplied to the first light emitting element ; a second light emitting element configured to emit laser light of a light amount corresponding to a value of current supplied to the second light emitting element;
a first light receiving element configured to receive the laser light emitted from the first light emitting element and to generate light receiving signal of a voltage corresponding to light amount of the laser light emitted from the first light emitting element to control a light amount of the laser light emitted from the first light emitting element, and configured to receive the laser light emitted from the second light emitting element and to generate light receiving signal of a voltage corresponding to light amount of the laser light emitted from the second light emitting element to control a light amount of the laser light emitted from the second light emitting element ;
a deflection means configured to deflect each laser light to cause the laser light emitted from the first light emitting element and the laser light emitted from the second light emitting element to scan the photoreceptor;
a second light receiving element arranged on a scanning path of the laser light deflected by the deflection means and is configured to receive the laser light emitted from the first light emitting element and deflected by the deflection means;
a timing control means configured to control emitting timing of the laser light of the first light emitting element and emitting timing of the laser light of the second light emitting element based on an image data in one scanning period of each laser light based on a generation timing of the synchronization signal;
an output means configured to output a first reference voltage for controlling a light amount of the laser light which is emitted from the first light emitting element and is incident on the second light receiving element and to output a second reference voltage for controlling a light amount of the laser light which scans the photoreceptor;
a first capacitor corresponding to the first light emitting element;
a second capacitor corresponding to the second light emitting element;
a voltage control means to which the light receiving signals corresponding to the first light emitting element and corresponding to the first light emitting element are input, to which the first reference voltage and the second reference voltage are input, configured to compare the voltage of the light receiving signal generated by receiving the laser light emitted from the first light emitting element with the first reference voltage or the second reference voltage and to control the voltage of the first capacitor based on a comparison result, and configured to compare the voltage of the light receiving signal generated by receiving the laser light emitted from the second light emitting element with the second reference voltage and to control the voltage of the second capacitor based on a comparison result; and
a current supply means arranged to supply current of which a value corresponds to the voltage of the first capacitor to the first light emitting element and to supply current of which a value corresponds to the voltage of the second capacitor to the second light emitting element.

6. The image forming apparatus according to claim 5, wherein the first reference voltage is higher than a value of the second reference voltage.

7. The image forming apparatus according to claim 5, wherein the output means is further configured to separately output the first reference voltage and the second reference voltage one time during one scanning period of the laser light.

8. The image forming apparatus according to claim 7, wherein, in one scanning period of the laser light, the output means is further configured to output the second reference voltage between timing at which the first reference voltage is output and timing at which the laser light scans the photoreceptor.

9. The image forming apparatus according to claim 5,

wherein the first reference voltage is higher than a value of the second reference voltage, and
wherein electrostatic capacitance of the first capacitor is larger than that of the second capacitor.

10. An image forming apparatus comprising:

a photoreceptor;

a light emitting element configured to emit laser light of a light amount corresponding to a value of current supplied;

a holding means configured to hold a control value with respect to a value of current;

a current supply means arranged to supply the current based on the control value to the light emitting element;

a first light receiving element configured to receive the laser light emitted from the light emitting element;

a deflection means configured to deflect the laser light to cause the laser light emitted from the light emitting element to scan the photoreceptor;

a second light receiving element arranged on a scanning path of the laser light deflected by the deflection means and configured to generate a synchronization signal by receiving the laser light;

a timing control means configured to control emitting timing of the laser light based on an image data in one scanning period of the laser light based on a generation timing of the synchronization signal;

a light amount control means configured to execute first light amount control and second light amount control at different timing during one scanning period of the laser light, wherein the first light amount control is to emit the laser light emitted from the light emitting element to cause the holding means to hold the control value based on light receiving result of the first light receiving element which received the laser light to control a light amount of the laser light which is incident on the second light receiving element, and wherein the second light amount control is to emit the laser light emitted from the light emitting element to cause the holding means to hold the control value based on light receiving result of the first light receiving element which received the laser light to control a light amount of the laser light which scans the photoreceptor.

**11.** The image forming apparatus according to claim 10,

wherein the holding means is a capacitor for holding voltage as the control value, and

wherein the light amount control means is further configured to control the voltage of the capacitor based on the light receiving result of the first light receiving element.

**12.** The image forming apparatus according to claim 11,

wherein the light amount control means is further configured to control voltage of the same capacitor based on the light receiving result of the first light receiving element in the first light amount control and in the second light amount control, and

wherein the control means is further configured to execute the second control after the synchronization signal is generated by executing the first control between Nth scanning and N+1 scanning during which laser light scans the photoreceptor.

**13.** The image forming apparatus according to claim 11,

wherein the holding means comprises a first capacitor and a second capacitor as the capacitor, and

wherein the light amount control means is further configured to control voltage of the first capacitor based on the light receiving result of the first light receiving element in the first light amount control and to control voltage of the second capacitor based on the light receiving result of the first light receiving element in the second light amount control.

**14.** The image forming apparatus according to claim 13, further comprising:

an output means configured to output a first reference voltage to control a light amount of the laser light which is emitted from the first light emitting element and is incident on the second light receiving element and to output a second reference voltage to control a light amount of the laser light which scans the photoreceptor,

wherein the light amount control means further comprises a voltage control means to which the light receiving signal and the first reference voltage or the second reference voltage are input,

wherein the voltage control means is further configured to compare the voltage of the light receiving signal generated by receiving the laser light emitted from the first light emitting element with the first reference voltage or the second reference voltage to control the voltage of the first capacitor based on a comparison result, and to compare the voltage of the light receiving signal generated by receiving the laser light emitted from the second light emitting element with the second reference voltage to control the voltage of the second capacitor based on a comparison result.

**15.** The image forming apparatus according to claim 14,

wherein the first reference voltage is higher than a value of the second reference voltage, and wherein electrostatic capacitance of the first capacitor is larger than that of the second capacitor.

FIG. 1

FIG. 2

FIG. 3

FIG. 4A

FIG. 4B

FIG. 5A

FIG. 5B

FIG. 6

EP 3 133 446 A1

FIG. 7A

FIG. 7B

BD SIGNAL

VOLTAGE
SETTING
SIGNAL

DUTY:
100%

DUTY:50%

DUTY:25%

Vref

THRESHOLD

LASER OUTPUT

LIGHT
AMOUNT
CONTROL

IMAGE
FORMING

LIGHT
AMOUNT
CONTROL

FIG. 8

FIG. 9

| CAPACITY SWITCHING SIGNAL | | | |
|---|---|---|---|
| HOLD CAPACITOR TO BE SELECTED | HOLD CAPACITOR 98b (a-c CONNECTION) | HOLD CAPACITOR 98a (a-b CONNECTION) | HOLD CAPACITOR 98b (a-c CONNECTION) |

FIG. 10

STARTING UP

| | | |
|---|---|---|
| BD SIGNAL | | |
| LASER CONTROL MODE | DISCHARGE | APC(1) | OFF | APC(2) |
| SAMPLE HOND SIGNAL | SAMPLE | HOLD | SAMPLE → |
| VIDEO SIGNAL | | |
| VOLTAGE SETTING SIGNAL | | |
| Vref | (GND) | |
| CAPACITY SWITCHING SIGNAL | CAPACITOR 98a | CAPACITOR 98b |
| LASER OUTPUT | (GND) | |

FIG. 11A

| | | |
|---|---|---|
| BD SIGNAL | | |
| LASER CONTROL MODE | APC(1) | OFF | APC(2) | OFF | VDO | OFF | APC(1) |
| SAMPLE HOLD SIGNAL | SAMPLE → | HOLD | SAMPLE → | HOLD | SAMPLE ▶ |
| VIDEO SIGNAL | | |
| VOLTAGE SETTING SIGNAL | | |
| Vref | (GND) | |
| CAPACITY SWITCHING SIGNAL | CAPACITOR 98a | CAPACITOR 98b | CAPACITOR 98a |
| LASER OUTPUT | (GND) | |

FIG. 11B

FIG. 12

EP 3 133 446 A1

FIG. 13A

FIG. 13B

32

Europäisches
Patentamt

European
Patent Office

Office européen
des brevets

# EUROPEAN SEARCH REPORT

Application Number

EP 16 18 3925

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/347430 A1 (MAEDA YASUKAZU [JP] ET AL) 27 November 2014 (2014-11-27) * paragraph [0065] - paragraph [0111] * ----- | 1-15 | INV. G03G15/043 G03G15/00 |
| X | US 4 908 634 A (ARIMOTO AKIRA [JP] ET AL) 13 March 1990 (1990-03-13) * column 5, line 28 - column 6, line 28 * ----- | 1 | |

TECHNICAL FIELDS
SEARCHED    (IPC)

G03G

The present search report has been drawn up for all claims

| Place of search | Date of completion of the search | Examiner |
|---|---|---|
| Munich | 14 December 2016 | Götsch, Stefan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 18 3925

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-2016

| Patent document cited in search report | | Publication date | Patent family member(s) | | Publication date |
|---|---|---|---|---|---|
| US 2014347430 | A1 | 27-11-2014 | NONE | | |
| US 4908634 | A | 13-03-1990 | DE | 3903586 A1 | 17-08-1989 |
| | | | JP | H01202774 A | 15-08-1989 |
| | | | US | 4908634 A | 13-03-1990 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005212901 A